# FASCICULE DE BREVET EUROPEEN

(11) **EP 3 353 598 B1**
(45) Date de publication et mention de la délivrance du brevet: **05.11.2025**
(21) Numéro de dépôt: 16777717.6
(22) Date de dépôt: 08.09.2016
(51) Int. Cl.: G02C 11/00, G02C 7/08, G02C 7/10

(54) **MONTURE ELECTRONIQUE POUR DISPOSITIF OPTIQUE ET PROCEDE DE FONCTIONNEMENT DE LADITE MONTURE ELECTRONIQUE**
ELEKTRONISCHE FASSUNG FÜR OPTISCHE VORRICHTUNG, UND FUNKTIONSVERFAHREN EINER SOLCHEN ELEKTRONISCHEN FASSUNG
ELECTRONIC FRAME FOR OPTICAL DEVICE AND METHOD FOR OPERATING SAID ELECTRONIC FRAME

(30) Priorité: 24.09.2015 EP 15306489
(43) Date de publication de la demande: 01.08.2018
(73) Titulaire: Essilor International, 94220 Charenton-le-Pont (FR)
(72) Inventeur: JOUARD, Ludovic, 94227 Charenton Le Pont Cedex (FR); GILBERT, Cédric, 94227 Charenton Le Pont Cedex (FR)
(74) Mandataire: Plasseraud IP
(86) Numéro de dépôt international: PCT/FR2016/052243
(87) Numéro de publication internationale: WO 2017/051091

(56) Documents cités:
- FR-A1- 2 926 882
- FR-A1- 2 926 882
- JP-A- 2004 297 453
- US-A1- 2010 110 368
- US-A1- 2010 110 368

## Description

L'invention concerne une monture électronique.

Il peut s'agir à titre d'exemple non limitatif d'une monture comportant des composants électroniques, pour réaliser un dispositif optique, par exemple une paire de lunettes équipée de verres de correction, par exemple des lentilles de correction ou des verres de type cellules ophtalmiques à amplitude variable, commandées par un circuit électronique, ou bien encore avec de simples verres, teintés ou non.

Une monture électronique pour dispositif optique type lunettes comporte usuellement :
- un élément de face comprenant un logement d'accueil pour au moins un verre,
- au moins une branche reliée à l'élément de face par des extrémités respectives d'élément de face et de branche,
- et au moins un composant électronique.

On comprendra par « face », un ensemble d'éléments d'une monture pour un dispositif optique, l'ensemble étant destiné à être placé devant un visage lorsque la monture est portée par un utilisateur.

De telles montures électroniques consomment de l'énergie pour leur fonctionnement.

Des montures électroniques de l'art anterieur sont divulguées par exemple dans US 20101110368 et JP 2004 297453.

L'invention permet de détecter le port ou non port de ces montures électronique, en particulier (mais non exclusivement) pour limiter la consommation d'énergie de la monture électronique quand le dispositif optique type lunettes n'est pas utilisé.

L'invention concerne une monture électronique selon la revendication 1.

Grâce à la présence du capteur de champ magnétique ou électrique et de l'émetteur de champ magnétique ou électrique sur la monture électronique, grâce au fait que l'un d'entre eux soit mobile en déplacement par rapport à l'autre et grâce au mode de fonctionnement ainsi défini, la monture électronique est équipée de moyens qui permettent de mettre en veille son alimentation en énergie lorsqu'elle n'est pas portée.

En effet, en considérant que la seconde position soit assimilée à une position fermée des branches d'une monture et que la première position soit assimilée à une position ouverte des branches d'une monture (position indiquant par exemple le port de la monture), le capteur de champ magnétique ou électrique est capable de détecter l'une ou l'autre des positions de sorte à commander la mise en veille ou la réactivation de l'alimentation en énergie du circuit de commande.

Ainsi, l'invention permet d'économiser de l'énergie et permet de créer des montures électroniques intelligentes, qui gèrent automatiquement leur mode de fonctionnement sans que le porteur n'ait à intervenir (il n'est pas nécessaire que le porteur actionne un bouton pour que le circuit de commande de la monture fonctionne).

La monture électronique conforme à l'invention peut également comporter les caractéristiques suivantes, prises séparément ou en combinaison :
- le capteur est avantageusement un capteur de champ magnétique et l'émetteur est un émetteur de champ magnétique,
- de préférence, l'émetteur de champ magnétique ou électrique est positionné à l'une des extrémités parmi les extrémités de l'élément de face ou de la branche et le capteur de champ magnétique ou électrique est positionné à l'autre extrémité parmi les extrémités de l'élément de face ou de la branche,
- les extrémités respectives de l'élément de face et de la branche sont reliées par un élément charnière présentant un axe de rotation et ledit émetteur de champ magnétique ou électrique peut être positionné au voisinage de ladite charnière et peut être centré sur ledit axe de rotation de sorte que l'émetteur de champ magnétique ou électrique présente un axe de champ qui est concourant à l'axe de rotation et dans un plan normal à l'axe de rotation,
- l'émetteur de champ magnétique est un aimant de forme sensiblement cylindrique et ledit aimant peut être polarisé dans le sens radial,
- l'aimant de forme sensiblement cylindrique est positionné dans ledit élément charnière et l'aimant présente un méplat permettant de faciliter son orientation au moment du montage,
- l'aimant peut présenter un trou traversant pour accueillir une vis pour sa fixation sur ladite monture,
- ledit capteur de champ magnétique ou électrique peut présenter une surface de détection et le capteur peut être un capteur mesurant une valeur d'un champ magnétique ou électrique sur ladite surface de détection suivant une direction de mesure prédéterminée,
- dans ce dernier mode de réalisation, il peut être prévu que la direction de mesure prédéterminée soit concourante avec l'axe de rotation de ladite charnière et dans un plan normal à cet axe de rotation,
- enfin, ledit capteur de champ magnétique est un capteur de type analogique, pouvant être un capteur de type à magnétorésistance anisotrope, un capteur à Effet Hall, un capteur Reed.

L'invention concerne en outre un ensemble comportant une monture électronique, telle que définie ci-dessus, et un dispositif de charge de ladite monture, ladite monture électronique comportant un support de charge. L'ensemble conforme à l'invention est remarquable en ce que ledit circuit de commande est apte à autoriser la charge de la monture uniquement si le circuit de commande reçoit un signal de seconde position.

Enfin, l'invention concerne un procédé de fonctionnement d'une monture telle définie ci-dessus. Le procédé conforme à l'invention est remarquable en ce que, quand le circuit de commande reçoit un signal de seconde position, ledit circuit de commande commande la mise en veille de la monture électronique.

Suivant un mode de mise en œuvre avantageux d'une monture électronique comportant plusieurs composants électroniques, le procédé prévoit que, quand ledit circuit de commande reçoit un signal de seconde position, ledit circuit de commande commande une désactivation du fonctionnement de l'un des composants électroniques.

Suivant encore un mode de mise en œuvre avantageux d'une monture électronique pour un ensemble tel que défini ci-avant, le procédé prévoit que, quand ledit circuit de commande reçoit un signal de première position, le circuit de commande empêche la charge de ladite monture électronique.
Enfin, suivant encore un mode de mise en œuvre avantageux d'une monture électronique pour un ensemble tel que défini ci-avant, le procédé prévoit que, quand le circuit de commande :reçoit un signal de seconde position, le circuit de commande autorise la charge de la monture électronique.

Pour pouvoir être exécutée, l'invention est exposée de façon suffisamment claire et complète dans la description suivante qui est, en plus, accompagnée de dessins dans lesquels :
- la figure 1 est une vue de coupe schématique d'une partie d'une monture électronique conforme à un premier mode de réalisation de l'invention,
- la figure 2 est un agrandissement de la vue en coupe montrée en figure 1,
- la figure 3 est une vue en perspective d'un capteur de champ magnétique que comporte la monture montrée en figure 1,
- la figure 4 est une vue en perspective d'un émetteur de champ magnétique que comporte la monture montrée en figure 1.

Par souci de clarté, seuls les éléments utiles à la compréhension des modes de réalisation décrits ont été représentés.

De plus, les références désignant un même élément d'un mode de réalisation à un autre seront conservées.

Enfin, dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

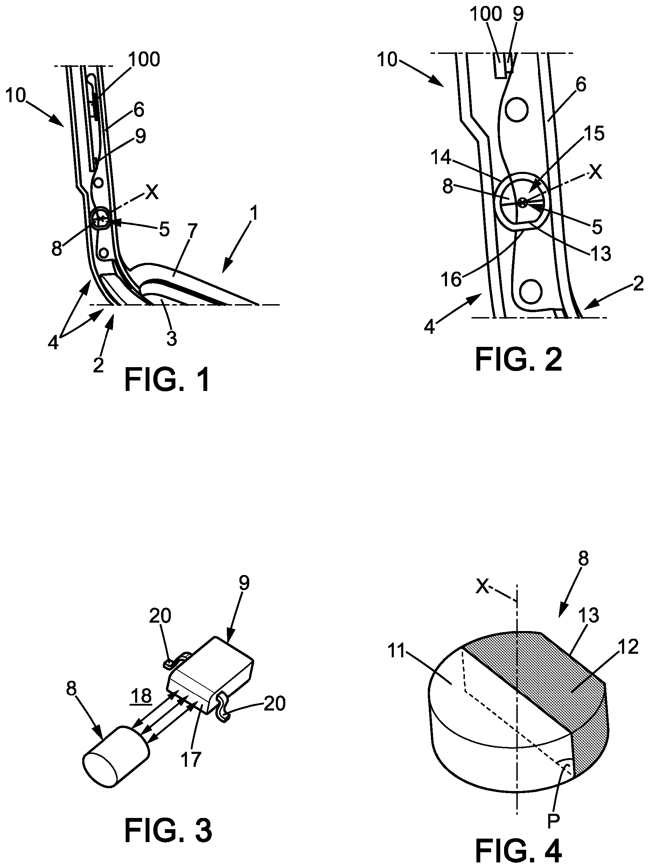

La figure 1 montre une partie d'une monture électronique 1 conforme à l'invention.

Seule la partie de la monture électronique comportant les éléments propres à l'invention a été illustrée.

La monture électronique 1 comporte un élément de face 2, logeant partiellement un verre 3.

Le verre 3 illustré peut être un verre dont les dimensions sont telles qu'il se place devant un œil du porteur de la monture électronique. Le verre 3 peut également être un verre de type « masque », qui présente des dimensions telles qu'il se positionne devant les deux yeux du porteur de la monture électronique.

Le verre 3 est, dans le cadre de l'exemple illustré, cerclé par un cadre 7, le cadre 7 maintenant les bords du verre 3. Le cadre 7 appartient à l'élément de face.

Seule une partie de l'élément de face 2 a été illustrée, cette partie correspondant à une extrémité 4 de l'élément de face 2 au voisinage d'une charnière 5, reliant l'élément de face 2 à une branche 6.

Plus précisément, l'extrémité 4 de l'élément de face 2 et une extrémité 10 de branche 6 sont reliées ensemble au moyen de la charnière 5.

La charnière 5 présente un axe de rotation X qui permet de faire pivoter la branche 6 par rapport à l'élément de face 2 de manière à ramener la branche 6 contre l'élément de face en position rapprochée et de manière à écarter la branche 6 de l'élément de face, jusqu'à une position écartée permettant à un porteur de porter la monture électronique 1. La position écartée est illustrée en figure 1.

De façon classique, la monture électronique 1 comporte un composant électronique (non montré) et un circuit de commande du fonctionnement du composant électronique.

Le composant électronique peut être le circuit électronique d'un verre actif 3, du type verre électrochrome, qui se teinte lorsqu'une valeur d'intensité lumineuse minimum est détectée par un capteur. Un tel circuit électronique et les moyens qui permettent de commander son fonctionnement sont logés dans le cadre 7 de la monture électronique 1. Ils n'ont toutefois pas été représentés sur la figure 1 afin d'en faciliter la lecture.

Conformément à l'invention, la monture électronique comporte un émetteur de champ magnétique ou électrique 8 et un capteur de champ respectivement magnétique ou électrique 9.

Dans le cadre de ce mode de réalisation, l'émetteur de champ magnétique ou électrique 8 est un émetteur de champ magnétique et plus particulièrement un aimant 8 illustré en figures 1, 2 et 4.

Le capteur de champ magnétique ou électrique 9 est un capteur de champ magnétique et il est illustré en figures 1 et 3.

Conformément au mode de réalisation illustré, le capteur de champ magnétique 9 est positionné sur la branche 6, à l'extrémité de branche 10 au voisinage de la charnière 5, tandis que l'aimant 8 est positionné à l'extrémité 4 de l'élément de face 2.

De cette façon, le capteur de champ magnétique 9 est monté mobile par rapport à l'aimant 8.

La branche 6 pouvant s'écarter ou se rapprocher de l'élément de face grâce à la charnière 5, entre une position écartée et une position rapprochée, le capteur de champ magnétique 9 peut également s'écarter ou se rapprocher de l'élément de face 2 entre une position écartée et une position rapprochée de la branche 6.

Dans le cadre du mode de réalisation illustré, l'aimant 8 est positionné dans la charnière 5 et dans le prolongement de l'axe de rotation X de la charnière 5.

De plus l'aimant 8 est fixe dans la charnière.

Cette position particulière de l'aimant 8, fixe et dans l'axe de la charnière 5, implique que le capteur de champ magnétique 9, fixé sur la branche 6, reste toujours à la même distance de l'aimant 8, mais que le capteur de magnétique est monté mobile en rotation autour de l'aimant 8 entre une première position limite, correspondant par exemple à la position écartée de la branche 6 (évoquée ci-dessus), et une seconde position limite, correspondant par exemple à la position rapprochée de la branche 6.

Les lignes de champ magnétique émises par l'aimant n'ont pas la même direction à l'endroit où se trouve le capteur de magnétique 9 en première position ou en seconde position. De plus, les valeurs de champ magnétique en première ou seconde position du capteur de champ magnétique ne sont pas les mêmes, les lignes de champ ne suivant pas le trajet du capteur de champ magnétique lors du passage de la branche 6 de la position écartée à la position rapprochée ou inversement.

Le capteur de champ magnétique 9 est donc capable de détecter une variation de valeur de champ magnétique et/ou de direction de champ magnétique suivant qu'il se trouve en première ou en seconde position, et même dans des positions intermédiaires entre la première et la seconde position.

Les figures 1 et 2 montrent que le capteur de champ magnétique ou électrique 9 est relié à une carte électronique 100 insérée dans la branche 6, la carte électronique 100 permettant de traiter les informations collectées par le capteur de champ magnétique ou électrique 9 et de transmettre des informations traitées au circuit de commande des composants électroniques de la monture électronique.

Les informations traitées peuvent être un signal, indiquant que la branche est en position écartée de l'élément de face : le signal sera alors appelé signal de première position.

Le signal peut également indiquer que la branche est en position rapprochée de l'élément de face : le signal sera alors appelé signal de seconde position.

Le circuit de commande, en réponse à la réception du signal de première position, peut réactiver l'alimentation en énergie des composants électroniques de la monture si cette dernière était dans un état de veille. Il peut également, toujours en réponse à la réception du signal de première position, empêcher la charge d'une batterie comprise dans la monture de lunette 1, ce qui garantit un minimum de sécurité pour le porteur.

Le circuit de commande, en réponse à la réception du signal de seconde position, peut arrêter momentanément l'alimentation en énergie de la monture électronique, la mettant en état de veille. Le circuit de commande peut également, en réponse à la réception du signal de seconde position, commander une désactivation du fonctionnement d'un seul élément électronique parmi plusieurs composants électroniques que comporte la monture électronique. Il peut s'agir, par exemple :
- d'un retour à l'état clair de verres électrochromes,
- d'une mise en veille de fonctions de surveillance de la luminosité ambiante,
- d'une mise en veille de fonctions de surveillance d'autres composants électroniques comme un capteur de réglage de la teinte prise par un verre électrochrome, un capteur de basculement du mode automatique en mode manuel, etc.
- d'un arrêt de l'alimentation des composants électroniques correspondants;
- d'une mise en mode veille d'un micro-processeur ou d'un micro-contrôleur : cet état serait une option de ce microcomposant, suivant laquelle le micro-processeur cesse toute activité à l'exception de la fonction de surveillance d'un changement de signal provenant du capteur de champ magnétique ou électrique 9.

Ainsi, la transmission au circuit de commande d'un signal de première position ou d'un signal de seconde position provoque une réponse du circuit de commande en direction d'un ou des composants que comporte la monture électronique.

Il va maintenant être fait référence à l'aimant 8 utilisé dans la monture électronique conforme à l'invention.

La figure 4 illustre l'aimant 8 : ce dernier est de forme sensiblement cylindrique, et est polarisé dans le sens radial.

L'aimant présente ainsi une première moitié d'aimant 11 présentant une première polarisation, et une seconde moitié d'aimant 12 avec une seconde polarisation, la première et la seconde moitié d'aimant 11 et 12 étant situés de part et d'autre d'un plan axial P de l'aimant 8.

Par ailleurs, l'aimant 8 comporte un méplat périphérique 13 permettant d'orienter correctement l'aimant lors de son positionnement à l'extrémité 4 de l'élément de face 2 de la monture électronique 1.

L'aimant 8 peut, par exemple, présenter un diamètre de 3 mm et une hauteur de 1mm et être polarisé radialement.

L'aimant peut être réalisé en NdFeB.

Pour un tel aimant 8, le capteur de champ magnétique 9 peut être placé à une distance de l'ordre de 5 à 8 mm de l'aimant.

L'extrémité 4 de l'élément de face 2 comporte un logement 14 d'accueil de l'aimant 8, ledit logement présentant une ouverture 15 par laquelle l'aimant est inséré et présentant une forme complémentaires de celle de l'aimant : le logement 14 présente donc une section sensiblement circulaire avec une partie de bord 16 qui est droit, contre laquelle le méplat 13 de l'aimant est placé quand l'aimant 8 est inséré dans le logement.

L'aimant 8 présente un trou traversant axial (non représenté), permettant la fixation de l'aimant 8 par vissage dans le logement 14.

Il va maintenant être fait référence au capteur de champ magnétique utilisé dans le cadre du présent mode de réalisation.

Le capteur de champ magnétique est illustré en figure 3.

Le capteur de champ magnétique 9 comporte deux pattes de fixation 20 sur la carte électronique 100. Il s'agit d'un capteur de champ magnétique 9 qui présente une surface de détection 17, et qui mesure la valeur d'un champ magnétique, en provenant d'un émetteur 8 de champ magnétique, sur la surface de détection suivant une direction de mesure prédéterminée 18 (doubles flèches sur la figure 3).

Le capteur de champ magnétique 9 est configuré pour posséder deux états de sortie, un premier état correspondant au signal de première position et un second état correspondant au signal de seconde position.

Plus précisément, le premier état du capteur en sortie est généré quand le champ magnétique mesuré est supérieur à une certaine valeur (qui peut être fixe ou paramétrable) et le second état du capteur en sortie est généré si le champ mesuré est inférieur à cette valeur.

Dans le mode de réalisation d'un capteur magnétique, le seuil de basculement du premier au second état du capteur magnétique est de l'ordre du milliTesla (mTesla).

Dans le cadre de ce mode de réalisation, on prévoit que la direction de mesure prédéterminée 18 soit concourante avec l'axe de rotation X de la charnière 5 et dans un plan normal à cet axe de rotation X.

Comme l'aimant 8 est placé co-axialement à l'axe de rotation X de la charnière, l'aimant 8 présente un axe de champ magnétique qui est concourant à l'axe de rotation X et normal à l'axe de rotation de la charnière 5. C'est ainsi que le capteur de champ magnétique 9 peut capter les variations du champ magnétique émis par l'aimant 8.

On notera que l'axe de polarisation de l'aimant 8 est aligné et coplanaire avec l'axe du capteur quand la branche est en position rapprochée. Une telle configuration conduit à un changement d'état du capteur quand la branche 6 est à moitié ouverte (sensiblement à mi-chemin entre la position rapprochée et la position écartée).

Les dispositions et orientations particulières de l'émetteur et du capteur de champ magnétique 8 et 9, présentées ci-dessus, permettent au système de supporter des variations de la valeur du champ magnétique de l'aimant et des variations de la distance entre l'axe de rotation et le centre du capteur de champ magnétique.

En effet, ce mode de réalisation garantit que :
- le champ magnétique minimal mesuré par le capteur est quasi nul (produit scalaire de deux vecteurs orthogonaux)
- le champ magnétique maximal est mesuré à une position angulaire de la branche 6 de 90° par rapport à l'axe magnétique.

Et ce, quelle que soit la valeur de champ magnétique et la distance entre le capteur de champ magnétique 9 et l'axe de rotation X.

Il est à noter que toute autre disposition de l'émetteur ou récepteur de champ magnétique crée une dépendance entre la valeur du champ minimal, la position angulaire des champ minimal et maximal par rapport à la position de l'aimant 8, la distance entre le capteur de champ magnétique et l'aimant et la valeur du champ magnétique.

A titre d'exemple, le capteur de champ magnétique 9 peut être un capteur à magnétorésistance anisotrope (capteur AMR) .

Il pourrait également être un autre type de capteur, comme un capteur analogique de type capteur à Effet Hall, ou bien un capteur Reed,
Dans le mode de réalisation décrit, le capteur de champ magnétique agit comme un détecteur de port de la monture électronique 1 : la branche rapprochée indique que l'équipement n'est pas porté.

Un autre mode de réalisation non illustré pourrait prévoir d'associer la monture électronique 1 à un chargeur de monture électronique 1.

Dans un tel cas, la monture électronique serait équipée d'un support de charge (non illustré).

On prévoit que, grâce à l'invention, le circuit de commande peut prendre en considération le signal émis par la carte électronique 100 pour autoriser ou non la charge de la monture.

En effet, et comme il a été déjà évoqué ci-avant, le fait de charger la monture électronique alors qu'elle est portée par un porteur est dangereux, et tout mode de réalisation qui le permettrait est interdit.

Aussi, si le circuit de commande prend en considération la nature du signal émis par la carte électronique en réponse aux indications du capteur de champ magnétique (ou électrique dans un autre mode de réalisation) 9, il est possible d'empêcher la charge de la monture électronique si les branches de la monture sont ouvertes (signal de première position émis par la carte électronique en direction du circuit de commande).

Ainsi, quand le signal de seconde position est émis par la carte électronique 100 suite à la réception des informations données par le capteur de champ magnétique (ou électrique dans un autre mode de réalisation) 9, alors le circuit de commande autorise la charge de la monture électronique.

On comprend de la description qui précède comment l'invention permet facilement de commander automatiquement la mise en veille d'une monture électronique non utilisée.

En alternative au mode de réalisation décrit, on peut envisager que l'émetteur de champ électrique ou magnétique soit positionné dans une branche, tandis que le capteur respectivement de champ électrique ou magnétique soit positionné dans la seconde branche. Ainsi, le capteur reçoit un champ non nul uniquement quand les branches sont dans une seconde position, le capteur et l'émetteur étant alors proches.
Les modes de réalisation conformes à l'invention qui viennent d'être décrits présentent de nombreux avantages parmi lesquels :
- La mise en œuvre est très simple : si l'on suppose qu'une carte électronique est déjà présente dans une branche, il suffit d'y ajouter un capteur. et de rajouter un aimant à la monture électronique. Il est nécessaire, dans un tel cas, que la carte soit dimensionnée pour gérer le signal du capteur dans une configuration spécifique de mise en veille, propre à un type particulier de micro-contrôleur.
- Le système est peu coûteux.
- Le fonctionnement d'une telle monture est très fiable car le procédé ne nécessite aucun contact mécanique.
- L'encombrement est très réduit.
- La monture est robuste (le système est peu sensible à des variations liées à la répétabilité des procédés d'assemblage ou des caractéristiques des éléments).
- Le système émetteur / capteur permet de réaliser des dispositifs électroniques étanches facilement.
- Une faible consommation d'énergie.
- Dans le cas d'un émetteur de champ magnétique, possibilité de détecter l'ouverture/fermeture de branches sans utiliser d'élément électronique dans l'élément intégrant l'aimant, permettant ainsi de regrouper tout l'électronique dans une branche, ou dans l'élément de face de la monture.

## Revendications

1. Monture électronique (1) pour dispositif optique, comportant un élément de face (2) de monture apte à loger au moins partiellement au moins un verre (3), ledit élément de face (2) étant relié à au moins une branche (6) par des extrémités (4, 10) respectives d'élément de face (2) et de branche (6), ladite monture électronique (1) comportant un circuit de commande du fonctionnement d'au moins un composant électronique,
caractérisée en ce qu'elle comporte au moins un émetteur de champ magnétique (8) et un capteur de champ respectivement magnétique (9), l'un au moins parmi ledit capteur (9) ou l'émetteur (8) étant monté mobile en déplacement par rapport à l'autre, entre une première position et une seconde position, le capteur de champ magnétique (9) étant apte à détecter une différence entre :
- une première direction de champ et/ou une première valeur de champ émises par ledit émetteur de champ magnétique (8) en première position et
- respectivement, une seconde direction de champ et/ou une seconde valeur de champ émise par ledit émetteur de champ magnétique (8) en seconde position,
de sorte à générer un signal de première position ou un signal de seconde position vers ledit circuit de commande, pour provoquer une réponse du circuit de commande en direction dudit au moins un composant électronique
les extrémités (4, 10) respectives de l'élément de face (2) et de la branche (6) étant reliées par un élément charnière (5) présentant un axe de rotation (X), l'émetteur de champ magnétique (8) étant un aimant (8) de forme sensiblement cylindrique positionné dans ledit élément charnière (5), l'aimant (8) présentant un méplat (13) permettant de faciliter son orientation au moment du montage, et dans lequel l'extrémité (4) de l'élément de face (2) comporte un logement d'accueil (14) de l'aimant (8), ledit logement présentant une ouverture (15) par laquelle l'aimant est inséré et présentant une section sensiblement circulaire avec une partie de bord qui est droit, contre laquelle le méplat (13) de l'aimant est placé quand l'aimant est inséré dans le logement.

2. Monture électronique (1) selon la revendication 1, **caractérisée en ce que** l'émetteur de champ magnétique (8) est positionné à l'une (4) des extrémités parmi les extrémités (4, 10) de l'élément de face (2) ou de la branche (6) et **en ce que** le capteur de champ magnétique (9) est positionné à l'autre extrémité (10) parmi les extrémités (4, 10) de l'élément de face (2) ou de la branche (6).

3. Monture électronique (1) selon l'une quelconque des revendications 1 et 2, **caractérisée en ce que** ledit émetteur de champ magnétique (8) est centré sur ledit axe de rotation (X) de sorte que l'émetteur de champ magnétique ou électrique (8) présente un axe de champ magnétique qui est concourant à l'axe de rotation (X) et dans un plan normal à l'axe de rotation (X).

4. Monture électronique (1) selon l'une quelconque des revendications précédentes, **caractérisée en ce que** ledit aimant (8) est polarisé dans le sens radial.

5. Monture électronique (1) selon l'une quelconque des revendications précédentes, **caractérisée en ce que** l'aimant (8) présente un trou traversant pour accueillir une vis, permettant sa fixation sur ladite monture électronique (1).

6. Monture électronique (1) selon l'une quelconque des revendications précédentes, **caractérisée en ce que** ledit capteur de champ magnétique (9) présente une surface de détection (17) et **en ce que** le capteur de champ magnétique (9) est un capteur mesurant une valeur d'un champ magnétique sur ladite surface de détection (17) suivant une direction de mesure prédéterminée (18).

7. Monture électronique (1) selon la revendication 5, **caractérisée en ce que** la direction de mesure prédéterminée (18) est concourante avec l'axe de rotation (X) de ladite charnière et dans un plan normal audit axe de rotation (X).

8. Monture électronique (1) selon l'une quelconque des revendications précédentes, **caractérisée en ce que** ledit capteur de champ magnétique (9) est un capteur de type analogique, ledit capteur étant un capteur à magnétorésistance anisotrope, un capteur à Effet Hall, un capteur Reed.

9. Ensemble comportant une monture électronique (1) selon l'une quelconque des revendications précédentes et un dispositif de charge de ladite monture électronique (1), ladite monture électronique (1) comportant un support de charge, **caractérisée en ce que** ledit circuit de commande est apte à autoriser la charge de la monture uniquement si le circuit de commande reçoit un signal de seconde position.

10. Procédé de fonctionnement d'une monture électronique (1) selon l'une quelconque des revendications 1 à 8, **caractérisé en ce que**, quand le circuit de commande reçoit un signal de seconde position, ledit circuit de commande commande la mise en veille de la monture électronique.

11. Procédé de fonctionnement d'une monture électronique (1) selon l'une quelconque des revendications 1 à 8, ladite monture électronique (1) comportant plusieurs composants électroniques, **caractérisé en ce que**, quand ledit circuit de commande reçoit un signal de seconde position, ledit circuit de commande commande une désactivation du fonctionnement de l'un des composants électroniques.

12. Procédé de fonctionnement d'une monture électronique (1) pour un ensemble selon la revendication 9, **caractérisé en ce que** quand ledit circuit de commande reçoit un signal de première position, le circuit de commande empêche la charge de ladite monture électronique.

13. Procédé de fonctionnement d'une monture électronique (1) pour un ensemble selon la revendication 9, **caractérisé en ce que**, quand le circuit de commande reçoit un signal de seconde position, le circuit de commande autorise la charge de la monture électronique (1).

## Patentansprüche

1. Elektronische Fassung (1) für eine optische Vorrichtung mit einem Fassungsfrontelement (2), das dazu geeignet ist, mindestens ein Glas (3) zumindest teilweise aufzunehmen, wobei das Frontelement (2) über die jeweiligen Enden (4, 10) des Frontelements (2) und des Bügels (6) mit mindestens einem Bügel (6) verbunden ist, wobei die elektronische Fassung (1) eine Steuerschaltung für den Betrieb mindestens einer elektronischen Komponente aufweist,
**dadurch gekennzeichnet, dass** sie mindestens einen Magnetfeldsender (8) und einen Magnetfeldsensor (9) aufweist, wobei der Sensor (9) und/oder der Sender (8) relativ zum anderen zwischen einer ersten Position und einer zweiten Position beweglich angebracht sind/ist, wobei der Magnetfeldsensor (9) dazu geeignet ist, eine Differenz zwischen folgenden Größen zu erfassen:
- einer erste Feldrichtung und/oder einem ersten Feldwert, die/der von dem Magnetfeldsender (8) in der ersten Position ausgesendet werden, und
- jeweils einer zweite Feldrichtung und/oder einem zweiten Feldwert, die/der von dem Magnetfeldsender (8) in der zweiten Position ausgesendet werden, um ein Signal der ersten Position oder ein Signal der zweiten Position an die Steuerschaltung zu erzeugen, um eine Reaktion der Steuerschaltung in Richtung der mindestens einen elektronischen Komponente zu bewirken,
wobei die jeweiligen Enden (4, 10) des Frontelements (2) und des Bügels (6) durch ein Scharnierelement (5) mit einer Drehachse (X) verbunden sind, wobei der Magnetfeldsender (8) ein im Wesentlichen zylinderförmiger Magnet (8) ist, der in dem Scharnierelement (5) positioniert ist, wobei der Magnet (8) eine Abflachung (13) aufweist, die seine Ausrichtung beim Zusammenbau erleichtert, und wobei das Ende (4) des Frontelements (2) eine Aufnahme (14) für den Magneten (8) aufweist, wobei die Aufnahme eine Öffnung (15) aufweist, durch die der Magnet eingeführt wird, und einen im Wesentlichen kreisförmigen Querschnitt mit einem geraden Randbereich aufweist, an dem die Abflachung (13) des Magneten anliegt, wenn der Magnet in die Aufnahme eingeführt wird.

2. Elektronische Fassung (1) nach Anspruch 1, **dadurch gekennzeichnet, dass** der Magnetfeldsender (8) an einem (4) der Enden (4, 10) des Frontelements (2) oder des Bügels (6) positioniert ist und dass der Magnetfeldsensor (9) an dem anderen Ende (10) der Enden (4, 10) des Frontelements (2) oder des Bügels (6) positioniert ist.

3. Elektronische Fassung (1) nach einem der Ansprüche 1 und 2, **dadurch gekennzeichnet, dass** der Magnetfeldsender (8) so auf der Drehachse (X) zentriert ist, dass der Sender des magnetischen oder elektrischen Feldes (8) eine Magnetfeldachse aufweist, die mit der Drehachse (X) zusammenfällt und in einer zur Drehachse (X) senkrechten Ebene liegt.

4. Elektronische Fassung (1) nach einem der vorhergehenden Ansprüche, **dadurch gekennzeichnet, dass** der Magnet (8) in radialer Richtung polarisiert ist.

5. Elektronische Fassung (1) nach einem der vorhergehenden Ansprüche, **dadurch gekennzeichnet, dass** der Magnet (8) ein Durchgangsloch zur Aufnahme einer Schraube aufweist, die seine Befestigung an der elektronischen Fassung (1) ermöglicht.

6. Elektronische Fassung (1) nach einem der vorhergehenden Ansprüche, **dadurch gekennzeichnet, dass** der Magnetfeldsensor (9) eine Erfassungsfläche (17) aufweist und dass der Magnetfeldsensor (9) ein Sensor ist, der einen Wert eines Magnetfelds auf der Erfassungsfläche (17) entlang einer vorbestimmten Messrichtung (18) misst.

7. Elektronische Fassung (1) nach Anspruch 5, **dadurch gekennzeichnet, dass** die vorbestimmte Messrichtung (18) mit der Drehachse (X) des Scharniers zusammenfällt und in einer Ebene senkrecht zu dieser Drehachse (X) liegt.

8. Elektronische Fassung (1) nach einem der vorhergehenden Ansprüche, **dadurch gekennzeichnet, dass** der Magnetfeldsensor (9) ein analoger Sensor ist, wobei der Sensor ein anisotroper magnetoresistiver Sensor, ein Hall-Effekt-Sensor oder ein Reed-Sensor ist.

9. Anordnung mit einer elektronischen Fassung (1) nach einem der vorhergehenden Ansprüche und einer Ladevorrichtung für die elektronische Halterung (1), wobei die elektronische Fassung (1) einen Ladeträger aufweist, **dadurch gekennzeichnet, dass** die Steuerschaltung dazu geeignet ist, das Laden der Fassung nur dann zuzulassen, wenn die Steuerschaltung ein Signal der zweiten Position empfängt.

10. Funktionsverfahren für eine elektronische Fassung (1) nach einem der Ansprüche 1 bis 8, **dadurch gekennzeichnet, dass** die Steuerschaltung, wenn sie ein Signal der zweiten Position empfängt, die elektronische Fassung in den Standby-Modus versetzt.

11. Funktionsverfahren für eine elektronische Fassung (1) nach einem der Ansprüche 1 bis 8, wobei die elektronische Fassung (1) mehrere elektronische Komponenten aufweist, **dadurch gekennzeichnet, dass**, wenn die Steuerschaltung ein Signal der zweiten Position empfängt, die Steuerschaltung eine Deaktivierung der Funktion einer der elektronischen Komponenten steuert.

12. Funktionsverfahren für eine elektronische Fassung (1) nach Anspruch 9, **dadurch gekennzeichnet, dass** die Steuerschaltung, wenn sie ein Signal der ersten Position empfängt, die Steuerschaltung das Laden der elektronischen Fassung verhindert.

13. Funktionsverfahren für eine elektronische Fassung (1) für eine Anordnung nach Anspruch 9, **dadurch gekennzeichnet, dass**, wenn die Steuerschaltung ein Signal der zweiten Position empfängt, die Steuerschaltung das Laden der elektronischen Fassung (1) freigibt.

## Claims

1. Electronic frame (1) for an optical device, said frame including a front frame element (2) able to house at least partially at least one lens (3), said front element (2) being connected to at least one temple (6) via respective ends (4, 10) of the front element (2) and of the temple (6), said electronic frame (1) including a circuit for controlling the operation of at least one electronic component,
**characterized in that** it includes at least one magnetic-field emitter (8) and respectively one magnetic-field sensor (9), one at least of said sensor (9) or emitter (8) being mounted so as to be movable with respect to the other, between a first position and a second position, the magnetic-field sensor (9) being able to detect a difference between:
- a first field direction and/or a first field value of the field emitted by said magnetic-field emitter (8) in the first position, and,
- respectively, a second field direction and/or a second field value of the field emitted by said magnetic-field emitter (8) in the second position, so as to generate a first-position signal or a second-position signal to said control circuit, in order to cause a response of the control circuit in the direction of said at least one electronic component,
the respective ends (4, 10) of the front element (2) and of the temple (6) being connected by a hinge element (5) having an axis of rotation (X), the magnetic-field emitter (8) being a magnet (8) of substantially cylindrical shape positioned in said hinge element (5), the magnet (8) having a flat (13) allowing its orientation at the moment of mounting to be facilitated, and wherein the end (4) of the front element (2) includes a housing (14) for accommodating the magnet (8), said housing having an aperture (15) through which the magnet is inserted and having a substantially circular cross section with an edge portion that is straight, against which portion the flat (13) of the magnet is placed when the magnet is inserted into the housing.

2. Electronic frame (1) according to Claim 1, **characterized in that** the magnetic-field emitter (8) is positioned at one (4) of the ends among the ends (4, 10) of the front element (2) or of the temple (6) and **in that** the magnetic-field sensor (9) is positioned at the other end (10) of the ends (4, 10) of the front element (2) or of the temple (6).

3. Electronic frame (1) according to either one of Claims 1 and 2, **characterized in that** said magnetic-field emitter (8) is centred on said axis of rotation (X) so that the electric- or magnetic-field emitter (8) has a magnetic-field axis that is concurrent with the axis of rotation (X) and in a plane normal to the axis of rotation (X).

4. Electronic frame (1) according to any one of the preceding claims, **characterized in that** said magnet (8) is polarized in the radial direction.

5. Electronic frame (1) according to any one of the preceding claims, **characterized in that** the magnet (8) has a through-hole in order to accommodate a screw, allowing it to be fastened to said electronic frame (1).

6. Electronic frame (1) according to any one of the preceding claims, **characterized in that** said magnetic-field sensor (9) has a detection surface (17) and **in that** the magnetic-field sensor (9) is a sensor measuring a value of a magnetic field at said detection surface (17) in a preset measurement direction (18).

7. Electronic frame (1) according to Claim 5, **characterized in that** the preset measurement direction (18) is concurrent with the axis of rotation (X) of said hinge and in a plane normal to said axis of rotation (X).

8. Electronic frame (1) according to any one of the preceding claims, **characterized in that** said magnetic-field sensor (9) is an analogue sensor, said sensor being an anisotropic magnetoresistance sensor, a Hall-effect sensor, or a Reed sensor.

9. Assembly including an electronic frame (1) according to any one of the preceding claims and a device for charging said electronic frame (1), said electronic frame (1) including a charging holder, **characterized in that** said control circuit is able to permit the frame to charge only if the control circuit receives a second-position signal.

10. Method for operating an electronic frame (1) according to any one of Claims 1 to 8, **characterized in that**, when the control circuit receives a second-position signal, said control circuit places the electronic frame on standby.

11. Method for operating an electronic frame (1) according to any one of Claims 1 to 8, said electronic frame (1) including a plurality of electronic components, **characterized in that**, when said control circuit receives a second-position signal, said control circuit deactivates the operation of one of the electronic components.

12. Method for operating an electronic frame (1) for an assembly according to Claim 9, **characterized in that**, when said control circuit receives a first-position signal, the control circuit prevents said electronic frame from charging.

13. Method for operating an electronic frame (1) for an assembly according to Claim 9, **characterized in that**, when the control circuit receives a second-position signal, the control circuit permits the electronic frame (1) to charge.
